# EUROPÄISCHE PATENTSCHRIFT

(11) **EP 3 582 240 B1**
(45) Veröffentlichungstag und Bekanntmachung des Hinweises auf die Patenterteilung: **15.02.2023**
(21) Anmeldenummer: 19168111.3
(22) Anmeldetag: 11.07.2012
(51) Int. Cl.: B60J 10/00, B29C 45/14, B29K 23/00, B60J 10/24, H01H 13/16, H01H 35/32, H01H 3/14

(54) **SCHLAUCHVERSCHLUSS**
HOSE CLOSURE
RACCORD DE TUYAU

(30) Priorität: 13.07.2011 DE 202011050716 U
(43) Veröffentlichungstag der Anmeldung: 18.12.2019
(62) Teilanmeldung aus: 12005119.8
(73) Patentinhaber: GUMMI-WELZ GmbH u. Co. KG GUMMI-KUNSTSTOFFTECHNIK-SCHAUMSTOFFE, 89231 Neu-Ulm (DE)
(72) Erfinder: GREIN, Horst, 34637 Schrecksbach (DE); FRITSCHE, Wolfgang, 89134 Blaustein (DE); BRAIG, Jürgen, 89584 Ehingen (DE)
(74) Vertreter: Ter Meer Steinmeister & Partner

(56) Entgegenhaltungen:
- EP-A1- 0 653 810
- WO-A1-94/08119
- DE-C1- 19 632 592

## Beschreibung

Die Erfindung betrifft einen Schlauchverschluss, umfassend ein formgebendes Einsatzstück, das in das Schlauchende eingesetzt ist, und einen Elastomerkörper, der das Schlauchende verschließt.

Schläuche, die beispielsweise als Mantel für elektrische Schaltleisten eingesetzt werden, müssen an den Enden verschlossen werden. Häufig werden zur Abdichtung von Schläuchen Dichtstopfen eingesetzt. Im Fall der elektrischen Schaltleisten müssen elektrische Anschlüsse aus dem Schlauchinneren herausgeführt werden. Hierzu können Dichtstopfen mit einer Bohrung versehen sein. Alternativ werden kappenartige Endstücke auf den Schlauch geschoben und zusammengepresst (gecrimpt) oder festgeklebt. Hierdurch ergibt sich eine Vergrößerung der Schlauchabmessungen. Noch andere Maßnahmen bestehen darin, den Dichtstopfen außen mit Klebstoff zu versehen, so dass er nach dem Einziehen in das Schlauchinnere an der Wandung haftet. Der Hohlraum bis zum Schlauchende wird mit Dichtmasse gefüllt und ein Abschlussstück mit dem Schlauchende verklebt.

Gemäß der DE 200 13 310 U1 ist auf das Stirnende eines Kontaktinnenwandungen aufweisenden Schaltleistenschlauchs ein Kontaktierungsbauteil aufschiebbar, das mit einem flexiblen Mantelende ausgestattet ist. Ein formstabiles Plattenelement in Form eines Chipbauteils mit elektrisch leitfähiger Ober- und Unterseite ist mit einem Ende zentral in den Körper des Kontaktierungsbauteils eingesteckt und ist mit dem anderen Ende in den Schaltleistenschlauch eingeschoben. Ein Endwiderstand ist im Kontaktierungsbauteil untergebracht und ist über Anschlussdrähte elektrisch leitend mit dem Plattenelement verbunden. Auf das flexible Mantelende des Kontaktierungsbauteils ist ein Pressring aufgeschoben und zusammengepresst, wodurch eine Flächenpressung zu den Oberflächen des Plattenelements erzielt wird, die eine Fixierung des Kontaktierungsbauteils und elektrische Kontaktierung sicherstellen. Alternativ können am Kontaktierungsbauteil Spitzen oder Dorne vorgesehen sein, die in die elektrisch leitenden Kontaktwandungen eingesteckt werden. Zwischen der Schlauchaußenwandung und der Außenfläche des Kontaktierungsbauteils besteht ein Höhenunterschied, der die Einbaubedingungen mitbestimmt.

Aus der EP 0 383 671 A1 ist eine elektrische Schaltleiste bekannt, die in einem elektrisch isolierenden Rohrkörper zwei Leiter umfasst, die durch ein oder zwei Stege aus elektrisch isolierendem, weichem, elastischem Material von einander getrennt sind. Es ist ein Anschluss mit zwei Leitern gezeigt, die Zahnungen für eine Verankerung in den Leitern aufweisen. Mittels Schrumpfschlauch wird die Verbindung verschlossen.

In der DE 196 32 592 C1 ist eine Schaltleiste offenbart, die am Ende einen Konturkörper als Anschlussbauteil aufweist. Von diesem aus erstreckt sich ein nichtleitender Kontaktierungsfortsatz mit leitender Oberfläche und zwei Kontaktdornen, die bis zu den Litzen der elektrischen Leitungen reichen, ins Schlauchinnere. Die Montage des Konturkörpers erfolgt nach starkem Aufweiten des Stirnendes des Schlauchs. Werden die Aufweitmittel entfernt, schließt sich der Schlauch aufgrund seiner Eigenspannung um den Konturkörper und die Kontaktdorne stechen in die Kontaktwandungen des Schlauchs ein. Als weitere Maßnahme ist beschrieben, die Kontaktdorne definiert in die Kontaktwandungen einzudrücken.

WO 94/08119 A1 beschreibt einen extrudierten Sicherheitskantenschalter, der gegenüberliegende, leitende Gummiteile umfasst, die elastisch verformbar sind und bei Kontakt miteinander durch eine Änderung der elektrischen Leitfähigkeit einen Hinweise auf das Vorhandensein eines Hindernisses geben.

Der Erfindung liegt die Aufgabe zugrunde, einen Schlauchverschluss zu schaffen, der für elektrische Schaltleisten verwendbar ist und bei der Herstellung ein einfaches Handhaben erlaubt.

Diese Aufgabe ist durch die Erfindung bei einem Schlauchverschluss mit den Merkmalen des Anspruchs 1 gelöst. Vorteilhafte Weiterbildungen des erfindungsgemäßen Schlauchverschlusses sind Gegenstand der Unteransprüche.

Ein Schlauchverschluss gemäß der Erfindung umfasst ein formgebendes Einsatzstück, das in das Schlauchende eingesetzt ist, und einen Elastomerkörper, der das Schlauchende verschließt. Der Schlauch sowie der Elastomerkörper sind aus Kautschuk, vorzugsweise EPDM. Der Elastomerkörper ist an die Stirnseite des Schlauchs anvulkanisiert und setzt diesen in Längsrichtung bündig fort. Das Einsatzstück ragt mit dem freien Ende über das Schlauchende hinaus und ist dort von dem Elastomerkörper umgeben, wobei das Einsatzstück in dem für das Schlauchinnere vorgesehenen Bereich an gegenüberliegenden Seiten-mindestens jeweils einen Stachelvorsprung aufweist, mit dem es in die Schlauchwandung sticht.

Das Einsatzstück, das sich mit einem Teil im Endbereich des Schlauchs befindet und mit dem anderen Teil vom Elastomerkörper umgeben ist, verleiht dieser Verbindung Stabilität und erleichtert die Anfügung des Elastomerkörpers an das Schlauchende, indem es eine Ausrichtung desselben auf einfache Weise ermöglicht. Die Anvulkanisation des Elastomerkörpers liefert eine durchgehende tangentiale Fortsetzung des Schlauchs ohne Dimensionsänderung (Vergrößerung der Abmessungen), wie sie ansonsten bei Aufstecken und Verpressen oder Aufschrumpfen bzw. Verkleben eines Elastomerteils entsteht. Das heißt, der Übergang von Schlauch und Elastomerkörper ist ohne jegliche Stufe oder Verdickung wie bei einem einzigen Teil. Durch die Stachelvorsprünge ist das Einsatzstück während der Montage und auch später fest gehaltert und das Schlauchende stabil geschlossen. Im Fall eines Schaltleistenschlauchs besteht eine formschlüssige Verbindung zwischen den leitenden Stachelvorsprüngen und den elektrisch leitenden Mantelbereichen des Schlauchs.

Sind am Einsatzstück Anschlussdrähte vorgesehen, ist für diese durch die stoffschlüssige Verbindung mit dem Elastomermaterial eine Zugentlastung gebildet. Ist am Einsatzstück ein Prüfwiderstand oder ein sonstiges Bauteil angebracht, stellt dieser zusätzlich einen Widerstand gegen Zug in Längsrichtung dar.

Dadurch, dass das Elastomermaterial und der Schlauchmantel heiß zusammenvulkanisiert werden, ergibt sich eine stoffschlüssige Verbindung, die besonders dicht und fest ist.

Eine Vorrichtung zur Herstellung eines erfindungsgemäßen Schlauchverschlusses ist mit einem Hohlkörper versehen, der eine Aufnahme für das Schlauchende einschließlich des eingesetzten Einsatzstücks und einen Hohlraum für den zu bildenden Elastomerkörper umfasst. Im Hohlraum endet ein Einspritzkanal. Des Weiteren ist eine Spannvorrichtung vorgesehen, die das Schlauchende umschließt und druckbeaufschlagt. Eine Heizeinrichtung ist vorgesehen, die die Spannvorrichtung sowie den Hohlkörper im Bereich des entstehenden Elastomerkörpers erwärmt.

Bei einer vorteilhaften Ausführung der erfindungsgemäßen Vorrichtung ist die Spannvorrichtung mit dem Hohlkörper integriert.

Bei einer mehrteiligen, vorzugsweise zweiteiligen Ausführung der Vorrichtung braucht das Schlauchende lediglich in die Aufnahme eingelegt und dann der zweite Teil aufgesetzt werden. Aussparungen für die Kabeldurchführung sind zweckmäßig vorgesehen.

Die Spannvorrichtung ist vorzugsweise mit einer Profilierung versehen, um den Halteeingriff mit dem Schlauchende zu verstärken. Es kommt hierbei zu einer fixierend wirkenden Verformung des Schlauchmantels, die sich nach der Entnahme des mit dem Verschluss versehenen Schlauchs vollständig elastisch zurückbildet.

Die Abläufe bei der Herstellung des Schlauchverschlusses unter Verwendung der beschriebenen Vorrichtung sind wie folgt:

Das Einsatzstück wird in der vorgesehenen Länge in den Schlauch bis zu einer definierten Tiefe eingeschoben. Dieser kann ausreichend elastisch sein, um das Einschieben zu ermöglichen. Andernfalls kann der Mantel auch durch leichten seitlichen Druck aufgeweitet werden. Dadurch wird insbesondere im Fall von Stachelvorsprüngen die erforderliche Höhe freigegeben. Lediglich in Ausnahmefällen wird es erforderlich sein, zuvor das Schlauchende aufzuweiten.

Dann wird das Schlauchende mit dem teilweise vorstehenden Einsatzstück in eine Spritzform, d.h. die Aufnahme einer Einspritz-Vulkanisier-Vorrichtung, eingebracht. Die Aufnahme hat im inneren Bereich einen Hohlraum für den zu bildenden Elastomerkörper. Dort endet ein Einspritzkanal. Sofern mehrere Schlauchverschlüsse in einem Werkzeug parallel, d.h. gleichzeitig, gefertigt werden, sind entsprechend viele Hohlräume, Einspritzkanäle, etc. vorhanden. Die folgende Beschreibung bezieht sich auf eine Ausführung für die Herstellung eines einzigen Schlauchverschlusses mit entsprechend einem Hohlraum.

Das Schlauchende wird von der Spritzform umschlossen und dabei von einer Spannvorrichtung gehaltert und druckbeaufschlagt. Der Schlauch wird in der Regel zusammengedrückt, bis seine ursprüngliche Außenkontur wieder oder nahezu wieder erreicht ist. Das Einsatzstück ist dann unverrückbar fixiert. Im Fall von Stachelvorsprüngen werden diese beim Festspannen in den Schlauchmantel gepresst und verankern sich dort. Handelt es sich um den Schlauch einer Schaltleiste, dringen die Stachelvorsprünge in das elektrisch leitende Material ein, wobei eine leitende Verbindung zwischen dem Einsatzstück und dem leitenden Teil des Schlauchmantels hergestellt wird.

Durch das Pressen des Einsatzstücks über das Schlauchende wird das Einsatzstück während der Herstellung des Schlauchverschlusses zentriert im Hohlraum gehalten.

Die Aufnahme wird im Bereich des zu bildenden Elastomerkörpers erwärmt. Der Stempel der Vorrichtung, d.h. die Spannvorrichtung, wird mit aufgeheizt, damit das Schlauchende eine genügend hohe Temperatur erreicht. Die Erwärmung ist jedoch nur örtlich und der Schlauch außerhalb des in die Vorrichtung eingebrachten Schlauchteils hat eine wesentlich niedrigere Temperatur als der aufgeheizte Bereich und kann daher auf einfache Weise gehandhabt werden.

Das Elastomermaterial wird in den Hohlraum eingespritzt und wird an den Stirnkanten des Schlauchs anvulkanisiert. Durch das Einsatzstück ergibt sich eine Stabilisierung des gebildeten Elastomerkörpers. Wenn der Einsatzkörper mit Stachelvorsprüngen versehen ist, verhindern die im Schlauchmantel verankerten Stachelvorsprünge ein Verrutschen des Einsatzstücks ins Schlauchinnere aufgrund des beim Spritzvorgang entstehenden Überdrucks. Beim Pressvorgang dringen die Stachelvorsprünge gewöhnlich nicht bis zu ihrem Fuß in den Schlauchmantel ein. In den so gebildeten Zwischenraum zwischen der Schlauchinnenfläche und dem Einsatzstück fließt während des Einspritzens Elastomermaterial und verbindet den Elastomerkörper dort ebenfalls mit dem Schlauchmantel. Durch die vergrößerte Anspritzfläche zusätzlich zu der Stirnseitenfläche wird der Zusammenhalt verbessert.

Die Erfindung wird im Folgenden weiter anhand eines Ausführungsbeispiels und der Zeichnung beschrieben. Diese Darstellung dient lediglich zur Veranschaulichungszwecken und soll die Erfindung nicht auf die konkret angegebenen Merkmalskombinationen einschränken. Es zeigen
- Fig. 1:: eine Längsschnittansicht einer elektrischen Schaltleiste mit an beiden Enden gemäß der Erfindung ausgestattetem Schlauchverschluss,
- Fig. 2, 3: Schnittansichten der Einsatzstücke der beiden Schlauchverschlüsse von Fig. 1 mit elektrischen Anschlussleitungen und Prüfwiderstand,
- Fig. 4: eine Querschnittansicht eines Schlauchendes mit Einsatzstück vor dem Einspritzen von Elastomermaterial,
- Fig. 5, 6: schematische Schnittansichten einer Einspritz-Vulkanisier-Vorrichtung gemäß der Erfindung mit bereits fertiggestellten Schlauchverschlüssen gemäß Fig. 1 mit Anschlussleitungen bzw. Prüfwiderstand,
- Fig. 7:: eine perspektivische Draufsicht des unteren Teils einer Einspritz-Vulkanisier-Vorrichtung mit vier Aufnahmen für vier Schlauchenden,
- Fig. 8:: eine perspektivische Draufsicht des unteren Teils der Einspritz-Vulkanisier-Vorrichtung von Fig. 7 mit aufgesetztem Fixierblock,
- Fig. 9:: eine perspektivische Draufsicht der Einspritz-Vulkanisier-Vorrichtung ähnlich Fig. 8 mit einer weiteren aufgelegten Platte und
- Fig. 10:: eine perspektivische Gesamtansicht der Einspritz-Vulkanisier-Vorrichtung von Fig. 7 bis 9.

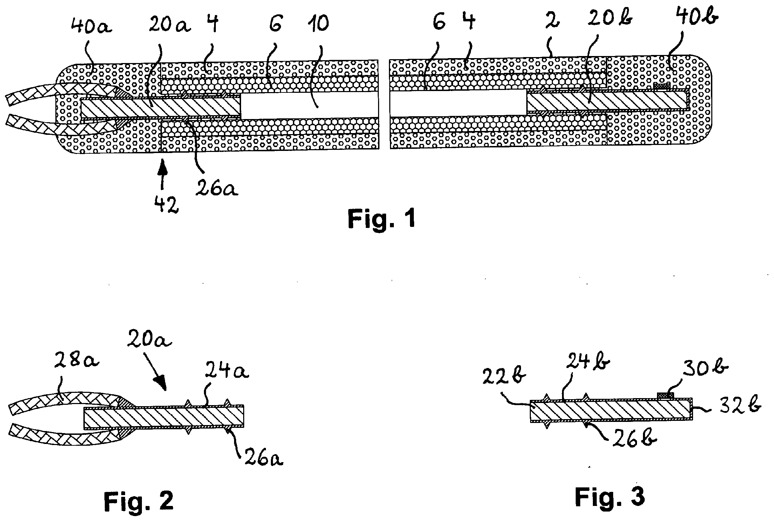

Im Folgenden werden der Aufbau und die Anordnung eines erfindungsgemäßen Schlauchverschlusses am Beispiel eines Schaltleistenschlauchs anhand von Fig. 1 bis 3 beschrieben.

Eine elektrische Schaltleiste in dem dargestellten Ausführungsbeispiel hat einen Schlauch 2, der aus mehreren Komponenten aufgebaut ist. Außen umfasst er einen Mantel 4 aus nicht leitendem Material (vorzugsweise EPDM - Ethylen-Propylen-DienKautschuk). An gegenüberliegenden Innenflächen ist der Mantel 4 mit einer Schicht 6 aus leitendem Material (vorzugsweise EPDM) versehen, in die vorzugsweise ein elektrischer Draht 8 einextrudiert ist. Im Übrigen umgrenzt der Schlauch 2 eine Hohlkammer 10. Am Ende ist in den Schlauch 2 jeweils ein formgebendes Einsatzstück 20 (20a, 20b) teilweise eingeschoben, das im Folgenden mehr im Einzelnen beschrieben wird.

Das gezeigte Einsatzstück 20a, 20b ist plattenförmig. Dies ist je nach Ausführungsbeispiel und Anwendungsfall nicht zwingend. Andere Gestaltungen sind möglich. Der Grundkörper 22a, 22b des Einsatzstücks 20a, 20b ist aus elektrisch nicht leitendem Material. An gegenüber liegenden Flächen - vorliegend oben und unten - ist die Oberfläche des Einsatzstücks 20a, 20b ganz oder teilweise mit einer Schicht 24a, 24b aus leitendem Material versehen. An dem in den Schlauch 2 ragenden Abschnitt des Einsatzstücks 20a, 20b erstrecken sich aus der Schicht 24a, 24b Stachelvorsprünge 26a, 26b in der Form von sich verjüngenden Stacheln (mit konischer oder Pyramidenform) oder Pins fort. Die Stachelvorsprünge 26a, 26b können z.B. auch aufgelötet sein. Pro Fläche ist mindestens ein Vorsprung vorgesehen. Ihre Gestalt könnte auch ein zylindrischer Stift oder ein Steg oder eine Rippe oder ein Körper anderer Gestalt sein, sofern der Körper in einer Spitze, einem Grat oder dergleichen endet. An dem sich außerhalb des Schlauchs 2 befindenden Abschnitt des Einsatzstücks 20a sind oben und unten Anschlussdrähte 28a angelötet und bedarfsweise Aufbauten vorhanden. Der sich außerhalb des Schlauchs 2 befindende Abschnitt des Einsatzstücks 20b ist mit einem Prüfwiderstand 30b oder anderen Aufbauten versehen und die Schichten 24b sind an der Stirnkante 32b miteinander verbunden. Alternativ können die Schichten 24b auch durch ein Loch im Einsatzstück verbunden sein.

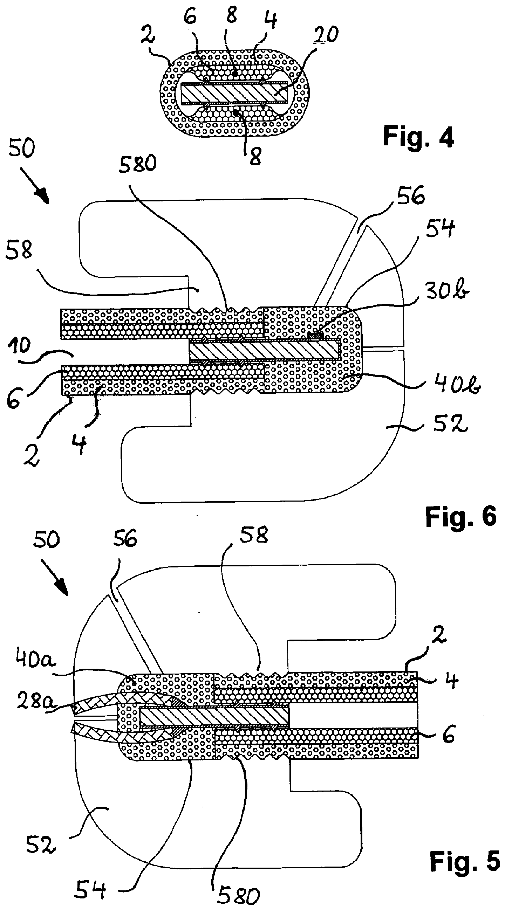

Die Dimensionierung des Einsatzstücks 20 und der Hohlkammer 10 beim dargestellten Ausführungsbeispiel ist derart, dass die Hohlkammer 10 das Einsatzstück 20 beim Einschieben aufnimmt und dieses danach mit der Ober- und Unterseite zwischen den leitenden Schichten 6 mehr oder weniger eng an diesen anliegend ruht, wie in Fig. 4 gezeigt ist. Die Stacheln 26 (26a, 26b) sind in die leitenden Schichten 6 eingedrückt und stellen einen elektrischen Kontakt mit diesen sicher, wobei sie außerdem das Einsatzstück im Schlauch 2 verankern.

An die Stirnseite des Schlauchs 2 schließt sich jeweils fluchtend ein kappenartiger Elastomerkörper 40 (40a, 40b) aus vorzugsweise EPDM an. Der Elastomerkörper 40 ist durch Anspritzen hergestellt worden und durch Vulkanisation mit dem Schlauch an dessen Stirnfläche verbunden worden, wie durch den Pfeil 42 veranschaulicht ist. Durch den Elastomerkörper 40a erstrecken sich die Anschlussdrähte 28a nach außen. Bei Verwendung von vorzugsweise EPDMisolierten Anschlussdrähten wird die Isolierung der Anschlussdrähte mit dem Elastomerkörper vulkanisiert. Durch ihre Einbettung in das Elastomermaterial sind sie gegen Zug gesichert und abgedichtet. Der Widerstand 30b, der in den Elastomerkörper 40b eingebettet ist, stellt eine zusätzliche Verankerung des Einsatzstücks 22b dar. Dies ist auch der Fall für zusätzliche Aufbauten auf dem Einsatzstück.

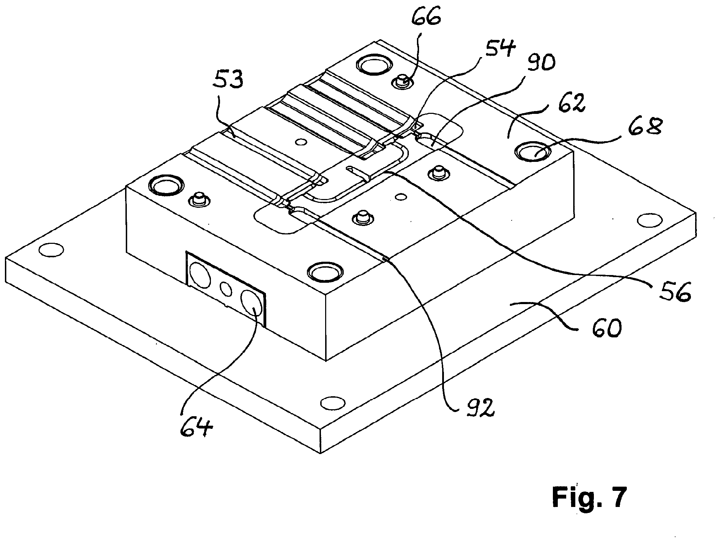

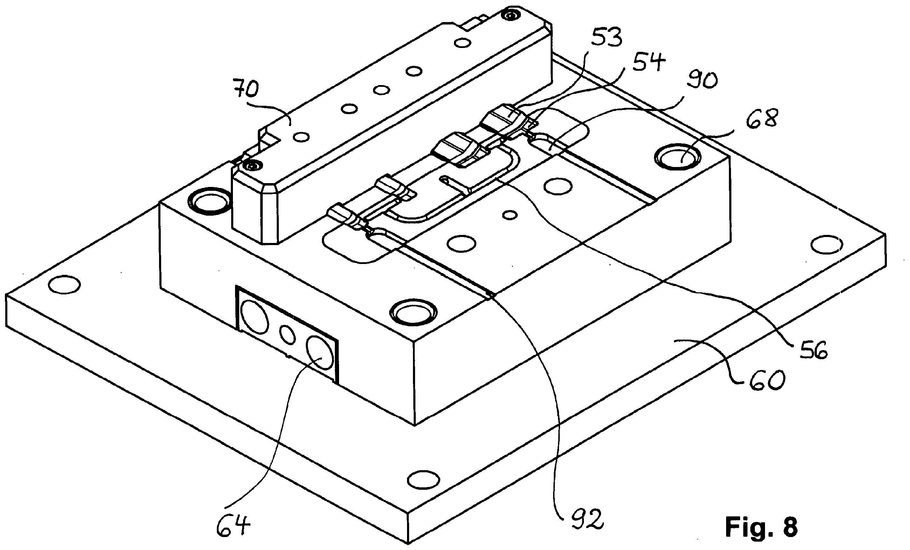

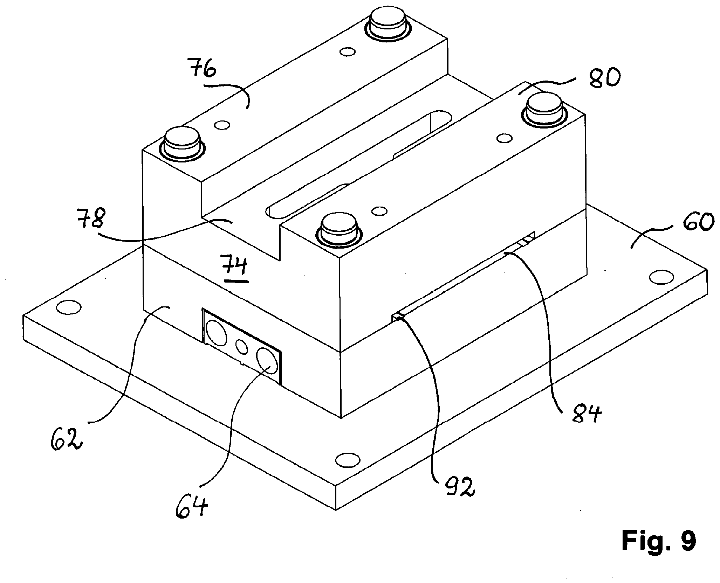

Fig. 5 und 6 veranschaulichen den Aufbau einer Einspritz-Vulkanisier-Vorrichtung (Werkzeug) 50 zur Herstellung von Schlauchverschlüssen wie gezeigt. Die Ansichten entsprechen dem Zustand nach der Herstellungsprozedur und vor Entnahme der fertigen Teile. Das Werkzeug 50 umfasst einen Hohlkörper 52 mit einer Aufnahme 53 für das Schlauchende einschließlich Einsatzstück (siehe Fig. 7 ) und einem Hohlraum 54 für den zu bildenden Elastomerkörper 40a. In den Hohlraum 54 mündet ein Einspritzkanal 56. Eine Spannvorrichtung 58, von der zwei Stempel gezeigt sind, ist in das Werkzeug 50 integriert und druckbeaufschlagt das Ende des Schlauchs 2. Die Arbeitsflächen der Stempel 58 weisen eine Profilierung 580 zur Verbesserung des Halteeingriffs der Spannvorrichtung 58 auf. Mittels der Profilierung 580 wird eine formgebende Klemmung des Schlauchendes während des Produktionsprozesses ermöglicht. Nach dem Lösen der Spannvorrichtung formt sich der Mantel 4 des Schlauchs an den Klemmstellen wieder zurück. Für die Anschlussdrähte 28a der Einsatzstücke 20a sind Durchführungen 92 und Aussparungen 84, 90 vorgesehen, siehe Fig. 7 bis 10 .

Die Arbeitsschritte zur Herstellung eines Schlauchverschlusses gemäß der Erfindung sind wie folgt:
- Einschieben eines Teils des Einsatzstücks in das Schlauchende,
- Einführen des Schlauchendes in einen Hohlkörper einer Einspritz-Vulkanisier-Vorrichtung,
- Pressen des mit dem Einsatzstück versehenen Schlauchendes, vorzugsweise, bis die Schlauchaußenkontur wieder oder nahezu wieder erreicht wird, und vorzugsweise formgebend,
- Erwärmen des Schlauchendes und des Hohlkörpers im Bereich des zu bildenden Elastomerkörpers,
- Einspritzen von Elastomermaterial in den Hohlkörper und
- Anvulkanisation an das Schlauchende.

Fig. 7 bis 10 veranschaulichen den Aufbau eines Beispiels eines solchen mehrteiligen Werkzeugs 50 mehr im Einzelnen, das die gleichzeitige Herstellung von vier Schlauchverschlüssen ermöglicht. Auf einer Grundplatte 60 sitzt ein Block 62, in dem sich Aufnahmen 53, Hohlräume 54 und Einspritzkanäle 56 befinden. Das Ausführungsbeispiel des Werkzeugs 50 ist für die Herstellung von vier Verschlüssen (je zwei mit Einsatzstücken 20a, 20b) vorgesehen. Bei den zwei äußeren Stationen befinden sich Aufnahmen 53 und Durchführungen 92 für die Anschlussdrähte 28a. Zu- und Ableitungskanäle (Heizkanäle) 64 sind ausgespart. Blöcke und Bolzen 66 sowie Bohrungen 68 sind zur Halterung und Führung von darauf liegenden Platten vorgesehen.

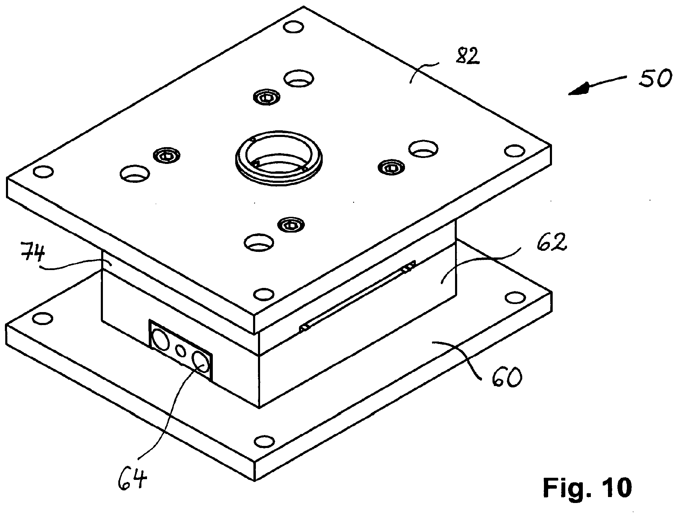

Quer über die Aufnahmen 53 erstreckt sich ein Fixierblock 70, der mehrteilig sein kann. Hierauf ist eine die Spannvorrichtung umfassende Platte 74 aufgesetzt, die zwei äußere Bereiche 76, 80 mit größerer Höhe und einen mittleren Bereich 78 mit geringerer Höhe aufweist. Der Bereich 76 überdeckt den Block 70. Der Bereich 78 überdeckt und definiert die Hohlräume 54. Fig. 10 zeigt eine Gesamtansicht des Werkzeugs 50 mit der Deckplatte 82.

## Patentansprüche

1. Elektrische Schaltleiste **dadurch gekennzeichnet, dass** die elektrische Schaltleiste umfasst:
einen Schlauch (2) mit einem äußeren Mantel (4) aus nichtleitendem Material und einer an gegenüberliegenden Innenflächen angeordneten Schicht (6) aus leitendem Material;
ein Einsatzstück (20), welches teilweise in ein Schlauchende des Schlauchs (2) eingeschoben ist; und
eine an eine Stirnseite des Schlauchendes anschließende Kappe, die als Elastomerkörper (40) und mit der Längsrichtung einer Schlauchaußenkontur des Schlauchs (2) fluchtend ausgebildet ist;
wobei das Einsatzstück (20) mit dem freien Ende über das Schlauchende hinausragt und dort von dem Elastomerkörper (40) umgeben ist;
wobei das Einsatzstück (20a, 20b) mindestens jeweils einen Vorsprung (26) aufweist, der in die leitende Schicht (6) des Schlauchs eingedrückt ist und einen elektrischen Kontakt mit der leitenden Schicht (6) sicherstellt und das Einsatzstück (20a, 20b) im Schlauch (2) verankert; und
wobei eine Oberfläche des Einsatzstücks (20a, 20b) ganz oder teilweise mit einer Schicht (24a, 24b) aus leitendem Material versehen ist und der Vorsprung (26) in dem für das Schlauchinnere vorgesehenen Bereich des Einsatzstücks (20) vorgesehen ist; oder
wobei das Einsatzstück (20a) aus nichtleitendem Material gebildet ist und zwei voneinander elektrisch isolierte Außenflächen (24a) mit jeweils mindestens einem elektrisch leitenden Vorsprung (26a) aufweist.

2. Elektrische Schaltleiste nach Anspruch 1, wobei ein elektrischer Draht (8) in die an den gegenüberliegenden Innenflächen angeordneten Schicht (6) einextrudiert ist.

3. Elektrische Schaltleiste nach Anspruch 1 oder 2, wobei der Schlauch (2) eine Hohlkammer (10) umgrenzt.

4. Elektrische Schaltleiste nach einem der Ansprüche 1 bis 3, wobei das Einsatzstück (20a, 20b) mit Aufbauten (30b) versehen ist.

5. Elektrische Schaltleiste nach einem der Ansprüche 1 bis 4, wobei das Einsatzstück (20a) an seinem freien Ende mit elektrischen Anschlussleitungen (28a) verbunden ist.

6. Elektrische Schaltleiste nach Anspruch 5, wobei sich die elektrischen Anschlussleitungen (28a) durch den Elastomerkörper (40) erstrecken.

7. Elektrische Schaltleiste nach einem der Ansprüche 1 bis 6, wobei das Einsatzstück (20b) einen Prüfwiderstand (30b) sowie eine Verbindung der Außenflächen (32b) aufweist.

8. Elektrische Schaltleiste nach einem der Ansprüche 1 bis 7, wobei die Stachelvorsprünge (26) als Spitzen oder Kanten ausgeführt sind.

9. Elektrische Schaltleiste nach einem der Ansprüche 1 bis 8, wobei das Einsatzstück formgebend und/oder plattenförmig ausgestaltet ist.

10. Elektrische Schaltleiste nach einem der Ansprüche 1 bis 9, wobei Einsatzstück einen Grundkörper aus elektrisch nichtleitendem Material aufweist.

11. Elektrische Schaltleiste nach einem der Ansprüche 1 bis 10, wobei die Stachelvorsprünge aufgelötet sind.

12. Elektrische Schaltleiste nach einem der Ansprüche 1 bis 11, wobei der Schlauch und der Elastomerkörper aus Kautschuk, insbesondere aus EPDM, gebildet sind.

## Claims

1. An electrical safety edge, **characterised in that** the electrical safety edge comprises:
a hose (2) with an outer jacket (4) of non-conductive material and a layer (6) of conductive material arranged on opposite inner surfaces;
an insert piece (20) which is partially inserted into a hose end of the hose (2); and
a cap adjoining an end face of the hose end, which is constructed as an elastomer body (40) and aligned with the longitudinal direction of an outer hose contour of the hose (2);
wherein the free end of the insert piece (20) protrudes beyond the hose end and is surrounded there by the elastomer body (40);
wherein the insert piece (20a, 20b) has at least one respective projection (26) which is pressed into the conductive layer (6) of the hose and ensures an electrical contact with the conductive layer (6) and anchors the insert piece (20a, 20b) in the hose (2); and
wherein a surface of the insert piece (20a, 20b) is provided with a layer (24a, 24b) of conductive material in whole or in part and the projection (26) is provided in the area of the insert piece (20) provided for the hose interior; or
wherein the insert piece (20a) is made of non-conductive material and has two outer surfaces (24a) which are electrically insulated from one another and respectively have at least one electrically conductive projection (26a).

2. The electrical safety edge according to claim 1, wherein an electrical wire (8) is extruded into the layer (6) arranged on the opposite inner surfaces.

3. The electrical safety edge according to claim 1 or 2, wherein the hose (2) delimits a hollow chamber (10).

4. The electrical safety edge according to one of claims 1 to 3, wherein the insert piece (20a, 20b) is provided with structures (30b).

5. The electrical safety edge according to one of claims 1 to 4, wherein the free end of the insert piece (20a) is connected to electrical connection lines (28a).

6. The electrical safety edge according to claim 5, wherein the electrical connection lines (28a) extend through the elastomer body (40).

7. The electrical safety edge according to any one of claims 1 to 6, wherein the insert piece (20b) has a test resistor (30b) and a connection of the outer surfaces (32b).

8. The electrical safety edge according to any one of claims 1 to 7, wherein the spiked projections (26) are designed as tips or edges.

9. The electrical safety edge according to any one of claims 1 to 8, wherein the insert piece is formed in a shaping and/or plate-shaped manner.

10. The electrical safety edge according to any one of claims 1 to 9, wherein the insert piece has a base body of electrically non-conductive material.

11. The electrical safety edge according to any one of claims 1 to 10, wherein the spiked projections are soldered.

12. The electrical safety edge according to any one of claims 1 to 11, wherein the hose and the elastomer body are made of rubber, in particular of EPDM.

## Revendications

1. Réglette de commutation électrique, **caractérisée en ce que** la réglette de commutation électrique comprend :
une gaine (2) ayant une enveloppe extérieure (4) en matériau non conducteur et une couche (6) de matériau conducteur agencée sur des faces intérieures opposées ;
une pièce d'insertion (20) qui est partiellement insérée dans une extrémité de gaine de la gaine (2) ; et
une coiffe adjacente à une face frontale de l'extrémité de gaine, laquelle coiffe étant réalisée sous la forme d'un corps élastomère (40) et de manière affleurante à la direction longitudinale d'un contour extérieur de gaine de la gaine (2) ;
dans laquelle la pièce d'insertion (20) avec l'extrémité libre fait saillie au-delà de l'extrémité de gaine et y est entourée par le corps élastomère (40) ;
dans laquelle la pièce d'insertion (20a, 20b) comporte au moins respectivement une saillie (26) qui est enfoncée dans la couche conductrice (6) de la gaine et assure un contact électrique avec la couche conductrice (6) et ancre la pièce d'insertion (20a, 20b) dans la gaine (2) ; et
dans laquelle une surface de la pièce d'insertion (20a, 20b) est entièrement ou partiellement pourvue d'une couche (24a, 24b) de matériau conducteur et la saillie (26) est prévue dans la zone de la pièce d'insertion (20) prévue pour l'intérieur de gaine ; ou
dans laquelle la pièce d'insertion (20a) est formée d'un matériau non conducteur et comporte deux faces extérieures (24a) électriquement isolées l'une par rapport à l'autre ayant respectivement au moins une saillie (26a) électriquement conductrice.

2. Réglette de commutation électrique selon la revendication 1, dans laquelle un fil électrique (8) est extrudé dans la couche (6) agencée sur les faces intérieures opposées.

3. Réglette de commutation électrique selon la revendication 1 ou 2, dans laquelle la gaine (2) délimite une cavité (10).

4. Réglette de commutation électrique selon l'une des revendications 1 à 3, dans laquelle la pièce d'insertion (20a, 20b) est munie d'éléments de montage (30b).

5. Réglette de commutation électrique selon l'une des revendications 1 à 4, dans laquelle la pièce d'insertion (20a) est reliée à des lignes de connexion électrique (28a) au niveau de son extrémité libre.

6. Réglette de commutation électrique selon la revendication 5, dans laquelle les lignes de connexion électrique (28a) s'étendent à travers le corps élastomère (40).

7. Réglette de commutation électrique selon l'une des revendications 1 à 6, dans laquelle la pièce d'insertion (20b) comporte une résistance d'essai (30b) ainsi qu'une jonction des faces extérieures (32b).

8. Réglette de commutation électrique selon l'une des revendications 1 à 7, dans laquelle les saillies en picots (26) sont réalisées sous forme de pointes ou d'arêtes.

9. Réglette de commutation électrique selon l'une des revendications 1 à 8, dans laquelle la pièce d'insertion est conçue de façon à prendre une forme et/ou en forme de plaque.

10. Réglette de commutation électrique selon l'une des revendications 1 à 9, dans laquelle la pièce d'insertion comporte un corps de base en matériau électriquement non conducteur.

11. Réglette de commutation électrique selon l'une des revendications 1 à 10, dans laquelle les saillies en picots sont brasées.

12. Réglette de commutation électrique selon l'une des revendications 1 à 11, dans laquelle la gaine et le corps élastomère sont formés en caoutchouc, en particulier en EPDM.
